# EUROPÄISCHE PATENTSCHRIFT

(11) **EP 1 293 459 B1**
(45) Veröffentlichungstag und Bekanntmachung des Hinweises auf die Patenterteilung: **20.10.2004**
(21) Anmeldenummer: 01121960.7
(22) Anmeldetag: 12.09.2001
(51) Int. Cl.: B65H 31/30, B65H 29/46, B65G 47/82

(54) **Vorrichtung zum Ausrichten und Abtransportieren von Paketen lose gestapelter Druckerzeugnisse**
Device for aligning and transporting packets of loose stacked printed products
Dispositif pour aligner et transporter des paquets de produits d'imprimerie mobiles empilés

(43) Veröffentlichungstag der Anmeldung: 19.03.2003
(73) Patentinhaber: Segbert GmbH & Co. KG, 48683 Ahaus (DE)
(72) Erfinder: Segbert, Stephan, 48619 Heek (DE)
(74) Vertreter: Rohmann, Michael, Dr.

(56) Entgegenhaltungen:
- EP-A- 0 373 331
- EP-A- 0 741 100
- EP-A- 0 745 547
- US-A- 4 518 300
- US-A- 6 106 219

## Beschreibung

Die Erfindung betrifft eine Vorrichtung zum Ausrichten und Abtransportieren von Paketen lose gestapelter Druckerzeugnisse, wobei eine Ausrichteinrichtung zum Ausrichten der Pakete vorgesehen ist und wobei die ausgerichteten Pakete auf eine bewegbare Aufnahmefläche überführbar sind, mit der sie von einer Ausgangsposition in eine Zielposition beförderbar sind. - Druckerzeugnisse meint im Rahmen der Erfindung insbesondere Kataloge, Prospekte und Zeitschriften. Diese Druckerzeugnisse werden nach dem Drucken für die Lagerung und/oder für den Transport zu ausgerichteten und abgepressten Paketen zusammengefasst. Das Ausrichten der Pakete erfolgt vorzugsweise auf einem Pakettisch (US-A-6 106 219).

Aus der Praxis sind Vorrichtungen bekannt, mit denen die Pakete lose gestapelter Druckerzeugnisse ausgerichtet, abgepresst und mit Hilfe einer Ausstoßeinrichtung auf eine bewegbare Aufnahmefläche bzw. auf einen Auslaufförderer ausgestoßen werden. Der Auslaufförderer ist in der Regel als Auslaufförderband ausgebildet. Die Ausstoßeinrichtung weist zumindest einen Ausstoßarm auf, mit dem ein Paket jeweils auf den Auslaufförderer bzw. auf das Auslaufförderband überführt wird. Bei dieser bekannten Vorrichtung besteht die Gefahr, dass die ausgerichteten und abgepressten Pakete auf dem Auslaufförderer wieder auseinanderfallen bzw. dass sich die Druckerzeugnisse im Paket relativ zueinander verschieben. Es versteht sich, dass die Lagerung und/oder der Transport solcher Pakete schwierig und problematisch ist und dass diese Pakete zumindest teilweise für die weitere Handhabung unbrauchbar sind. Um diese Gefahr zu minimieren wird der Auslaufförderer in der Praxis mit verhältnismäßig geringer Geschwindigkeit bewegt und auch der Ausstoßvorgang für die Pakete wird daran angepasst. Daraus resultieren aber nachteilhafte und nicht zufriedenstellende Arbeitsgeschwindigkeiten bzw. Taktzeiten.

Demgegenüber liegt der Erfindung das technische Problem zugrunde, eine Vorrichtung der eingangs genannten Art anzugeben, mit der die Pakete lose gestapelter Druckerzeugnisse sehr funktionssicher und zügig behandelt und vor allem abtransportiert werden können und die somit ein Arbeiten mit hohen Geschwindigkeiten und hohen Taktzeiten ermöglicht.

Zur Lösung dieses technischen Problems lehrt die Erfindung eine Vorrichtung zum Ausrichten und Abtransportieren von Paketen lose gestapelter Druckerzeugnisse, wobei eine Ausrichteinrichtung zum Ausrichten der Pakete vorgesehen ist und wobei die ausgerichteten Pakete auf eine bewegbare Aufnahmefläche überführbar sind, mit der sie von einer Ausgangsposition in eine Zielposition beförderbar sind,
wobei ein erstes Führungselement vorgesehen ist, das in der Ausgangsposition an der Vorderseite eines ausgerichteten ersten Paketes zur Anlage bringbar ist,
wobei das erste Führungselement, an der Vorderseite des ersten Paketes anliegend, mit dem ersten Paket in die Zielposition überführbar ist und wobei das erste Führungselement in der Zielposition von der Vorderseite des ersten Paketes entfernbar ist und in die Ausgangsposition zurückfahrbar ist,
wobei ein zweites Führungselement vorgesehen ist, das in der Ausgangsposition an der Vorderseite eines ausgerichteten zweiten Paketes zur Anlage bringbar ist,
und wobei das zweite Führungselement, an der Vorderseite des zweiten Paketes anliegend, mit dem zweiten Paket in die Zielposition überführbar ist, während das erste Führungselement in die Ausgangsposition zurückführbar ist. - Wenn das zweite Führungselement die Zielposition erreicht hat, wird dieses zweite Führungselement ebenfalls von der Vorderseite des zweiten Paketes entfernt und in die Ausgangsposition zurückgeführt. Das erste Führungselement liegt dann bereits wieder an der Vorderseite eines Paketes an und wird, an der Vorderseite des Paketes anliegend in die Zielposition überführt, undsoweiterfort. Es liegt also im Rahmen der Erfindung, dass stets eines der beiden Führungselemente, an der Vorderseite eines Paketes anliegend, von der Ausgangsposition in die Zielposition überführt wird und das zweite Führungselement währenddessen von der Zielposition in die Ausgangsposition zurückgeführt wird. Dies geschieht im ständigen Wechsel und vorzugsweise kontinuierlich.

Ein ausgerichtetes Paket lose gestapelter Druckerzeugnisse ist mit der bewegbaren Aufnahmefläche aus einer Ausgangsposition in die Zielposition überführbar. Es liegt dabei im Rahmen der Erfindung, dass die bewegbare Aufnahmefläche von zumindest einem sich von der Ausgangsposition zur Zielposition erstreckenden Förderband gebildet wird. Vorzugsweise sind zumindest zwei parallele Förderbänder als bewegbare Aufnahmeflächen vorgesehen. Die bewegbare Aufnahmefläche wird nachfolgend auch als Auslaufförderer bezeichnet.

Nach sehr bevorzugter Ausführungsform, der im Rahmen der Erfindung ganz besondere Bedeutung zukommt, sind die Führungselemente als vertikal angeordnete Führungsstangen ausgebildet. Ein Führungselement besteht dann also aus einer vertikal angeordneten Führungsstange, die das Paket lose gestapelter Druckerzeugnisse an seiner Vorderseite gleichsam abstützt und zwar entlang seines Weges von der Ausgangsposition zur Zielposition. Es liegt dabei im Rahmen der Erfindung, dass das Führungselement, vorzugsweise die Führungsstange, mit der Transportgeschwindigkeit der bewegbaren Aufnahmefläche bzw. des Auslaufförderers und somit synchron zum Auslaufförderer bewegt wird. Zweckmäßigerweise liegt eine Führungsstange über den Großteil der Höhe des jeweiligen Paketes an der Vorderseite des Paketes an. Vorzugsweise liegt eine Führungsstange dabei über zumindest 70 % der Höhe des Paketes an der Vorderseite an.

Vorzugsweise sind die Führungsstangen in der Ausgangsposition jeweils vertikal ausfahrbar und die ausgefahrene Führungsstange wird an der Vorderseite eines Paketes zur Anlage gebracht. Dabei ist eine Führungsstange entweder von oben oder von unten in vertikaler Richtung ausfahrbar und die ausgefahrene Führungsstange an der Vorderseite eines Paketes zur Anlage bringbar. Nach sehr bevorzugter Ausführungsform der Erfindung werden die Führungsstangen in der Ausgangsposition von unten vertikal ausgefahren und an der Vorderseite eines Paketes zur Anlage gebracht. - Nach sehr bevorzugter Ausführungsform der Erfindung sind die Führungsstangen in der Zielposition jeweils vertikal einfahrbar und auf diese Weise von der Vorderseite des Paketes entfernbar. Dabei sind Führungsstangen in der Zielposition entweder nach unten oder nach oben in vertikaler Richtung einfahrbar. Vorzugsweise sind die Führungsstangen in der Zielposition nach unten in vertikaler Richtung einfahrbar.

Vorzugsweise ist eine Führungsstange als Zylinderkolbenstange ausgebildet und ist diese Zylinderkolbenstange aus einem Zylinderkolben ausfahrbar sowie in den Zylinderkolben wieder einfahrbar. Zweckmäßigerweise wird die als Zylinderkolbenstange ausgebildete Führungsstange in der Ausgangsposition aus dem Zylinderkolben ausgefahren und in der Zielposition dann wieder in den Zylinderkolben eingefahren. Der Zylinderkolben wird also mit der ausgefahrenen Stützstange bzw. Zylinderkolbenstange von der Ausgangsposition zur Zielposition bewegt und anschließend mit eingefahrener Stützstange bzw. Zylinderkolbenstange von der Zielposition wieder zurück in die Ausgangsposition gefahren. Der Zylinderkolben ist zweckmäßigerweise unterhalb der bewegbaren Aufnahmefläche bzw. unterhalb des Auslaufförderers angeordnet.

Nach bevorzugter Ausführungsform der Erfindung ist ein Führungselement, vorzugsweise eine Führungsstange, unterhalb der bewegbaren Aufnahmefläche bzw. unterhalb des Auslaufförderers von der Zielposition in die Ausgangsposition zurückfahrbar. Vorzugsweise ist ein Zylinderkolben mit eingefahrener Führungsstange bzw. Zylinderkolbenstange unterhalb der bewegbaren Aufnahmefläche bzw. unterhalb des Auslaufförderers von der Zielposition in die Ausgangsposition zurückbewegbar.

Es liegt im Rahmen der Erfindung, dass ein Führungselement, vorzugsweise eine Führungsstange, auf einer Strecke von der Zielposition in die Ausgangsposition zurückfahrbar ist, die parallel zu der Förderstrecke ist, auf der ein Führungselement, vorzugsweise eine Führungsstange, von der Ausgangsposition zur Zielposition bewegbar ist. Zweckmäßigerweise ist dabei das Führungselement, vorzugsweise die Führungsstange, unterhalb der bewegbaren Aufnahmefläche bzw. unterhalb des Auslaufförderers von der Zielposition in die Ausgangsposition zurückfahrbar. - Nach sehr bevorzugter Ausführungsform der Erfindung sind die Führungselemente, vorzugsweise die Führungsstangen, kontinuierlich von der Ausgangsposition zur Zielposition und wieder von der Zielposition in die Ausgangsposition bewegbar.

Vorzugsweise ist an zumindest einer Seite, zweckmäßigerweise an beiden Seiten der bewegbaren Aufnahmefläche bzw. des Auslaufförderers zumindest ein seitliches Führungselement zum seitlichen Führen und/oder zum seitlichen Abstützen der Pakete vorgesehen. Bei dem seitlichen Führungselement bzw. bei den seitlichen Führungselementen kann es sich um Führungsrollen und/oder Führungsgurte handeln, welche Führungsgurte zweckmäßigerweise endlos umlaufen.

Der Erfindung liegt die Erkenntnis zugrunde, dass mit einer erfindungsgemäßen Vorrichtung nach Patentanspruch 1 beachtliche Vorteile erreicht werden. Dadurch, dass mit zwei Führungselementen gearbeitet wird, die im Wechsel an der Vorderseite eines Paketes anliegen bzw. wieder in die Ausgangsposition zurückgefahren werden, kann mit sehr kurzen Taktzeiten und somit sehr zügig gearbeitet werden. Vor allem ist durch den wechselweisen Einsatz der Führungselemente als Führungsstange für ein Paket eine kontinuierliche Bewegung der Pakete möglich. Mit anderen Worten können die ausgerichteten Pakete auf den Auslaufförderer ausgestoßen bzw. überführt werden, ohne dass ein Anhalten der Pakete notwendig ist. Von daher können auch im Vergleich zu den aus dem Stand der Technik bekannten Maßnahmen viel kürzere Abstände zwischen aufeinanderfolgenden Paketen eingerichtet werden. Dies bedingt ein vorteilhaft schnelles Abtransportieren der ausgerichteten Pakete und somit die beachtlichen kurzen Taktzeiten.

Nachfolgend wird die Erfindung anhand einer lediglich ein Ausführungsbeispiel darstellenden Zeichnung näher erläutert. Es zeigen in schematischer Darstellung:
- Fig. 1: eine Draufsicht auf eine erfindungsgemäße Vorrichtung,
- Fig. 2: einen Ausschnitt aus Fig. 1 in vergrößerter Darstellung,

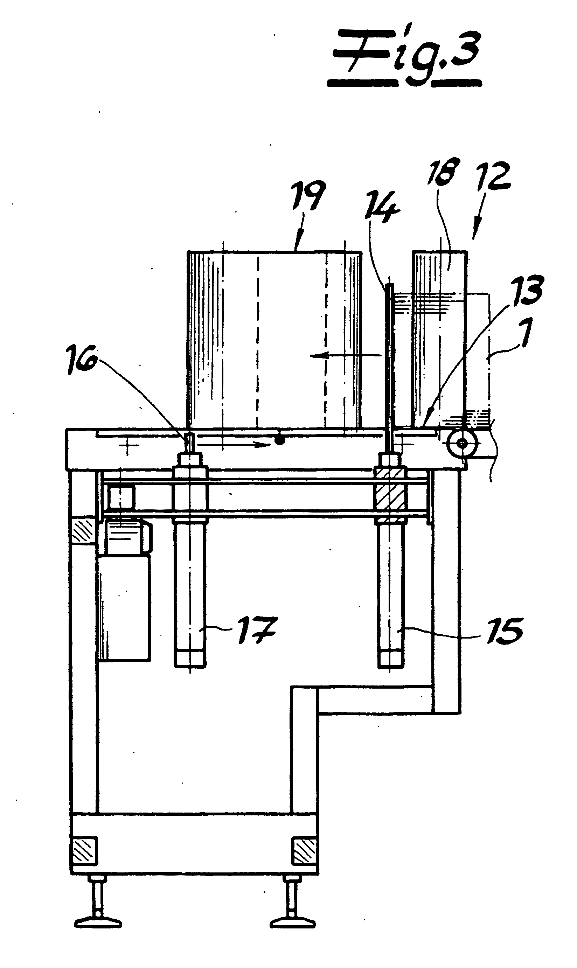

- Fig. 3: den Gegenstand nach Fig. 2 in einer Seitenansicht und

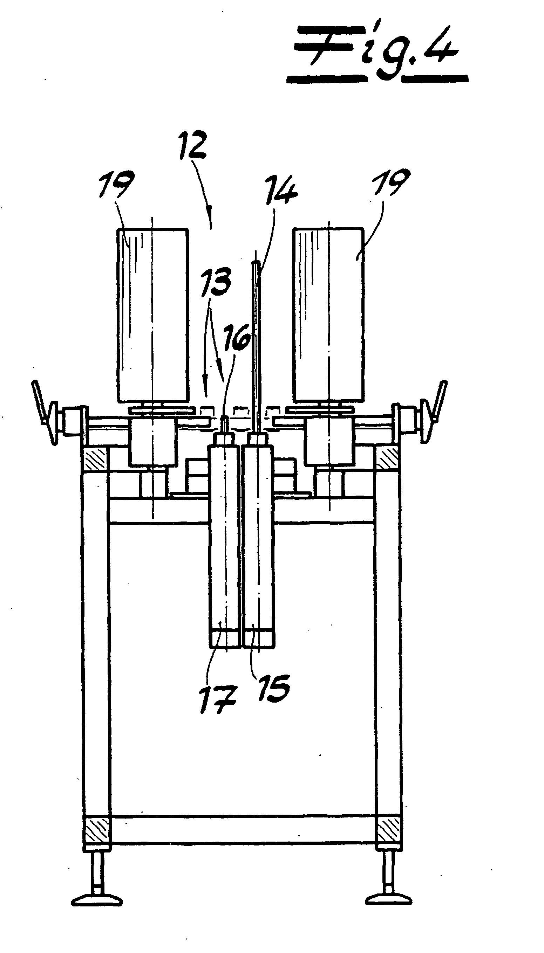

- Fig. 4: den Gegenstand nach Fig. 2 in einer Frontansicht.

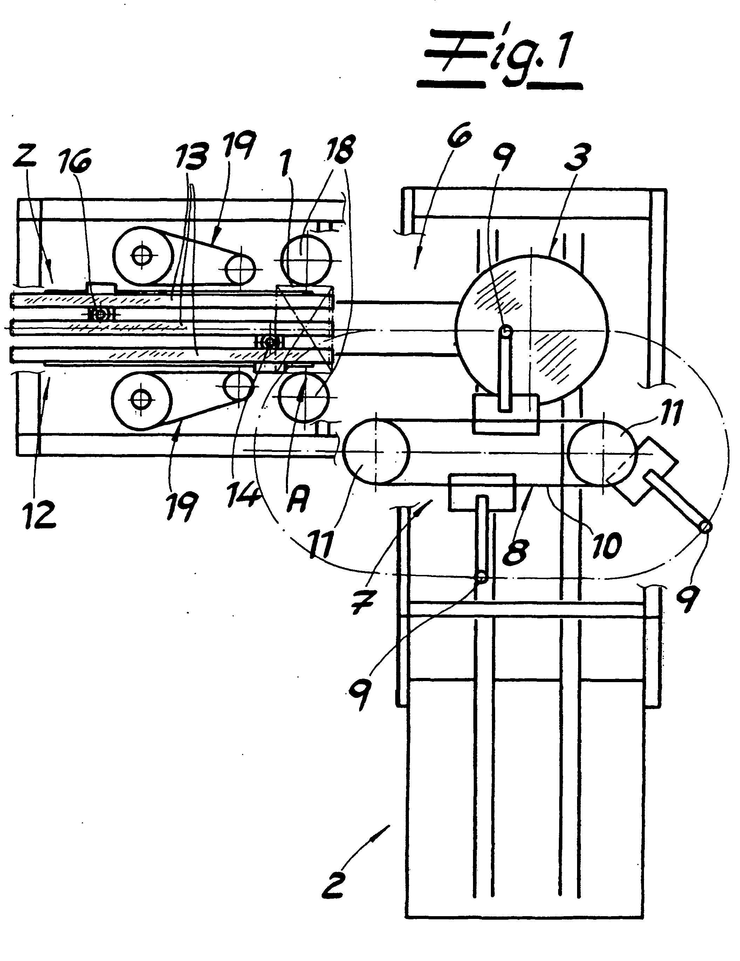

Die Figuren zeigen eine Vorrichtung zum Ausrichten und Abtransportieren von Paketen 1 lose gestapelter Druckerzeugnisse. In Fig. 1 ist erkennbar, dass die Vorrichtung einen Zulaufförderer 2 aufweist, der die lose gestapelten Druckerzeugnisse einem Pakettisch 3 zuführt. Die lose gestapelten Druckerzeugnisse können dabei beispielsweise schuppenartig übereinandergelegt mit dem Zulaufförderer 2 zugeführt werden. Vorzugsweise und im Ausführungsbeispiel sind seitlich am Pakettisch in Fig. 1 nicht dargestellte Paketausrichtplatten angeordnet, die zum Ausrichten der Pakete 1 zusammen- und auseinanderfahrbar sind. Fernerhin ist eine auf das jeweilige Paket 1 aufsetzbare Abpresseinrichtung 6 zum Abpressen der Pakete 1 vorgesehen. Weiterhin liegt es im Rahmen der Erfindung, dass zum Verblocken der Pakete 1 nicht näher dargestellte Elektroden eines Aufladungsaggregates vorgesehen sind. Die erfindungsgemäße Vorrichtung weist weiterhin eine Ausstoßeinrichtung 7 zum Ausstoßen der ausgerichteten und abgepressten Pakete 1 auf. Nach bevorzugter Ausführungsform der Erfindung und im Ausführungsbeispiel besteht die Ausstoßeinrichtung 7 aus zumindest zwei auf eine Endlosbahn 8 umlaufenden Ausstoßarmen 9. Vorzugsweise und im Ausführungsbeispiel weist die Ausstoßeinrichtung 7 drei periodisch auf einer Endlosbahn 8 umlaufende Ausstoßarme 9 auf. Die drei Ausstoßarme 9 sind jeweils vertikal orientiert und sind bezüglich der Endlosbahn 8 mit gleichem Abstand voneinander angeordnet. Im Ausführungsbeispiel sind die Ausstoßarme 9 an einen auf der Endlosbahn 8 umlaufenden Zahnriemen 10 angeschlossen, welcher Zahnriemen 10 über zwei Zahnscheiben 11 angetrieben ist.

Ein auf dem Pakettisch 3 ausgerichtetes und abgepresstes Paket 1 wird jeweils von einem Ausstoßarm 9 mitgenommen und an eine bewegbare Aufnahmefläche bzw. an den Auslaufförderer 12 übergeben. Dann befindet sich ein ausgestoßenes Paket in einer Ausgangsposition A auf dem Auslaufförderer 12. Nach Ausstoßen eines ersten Paketes 1 mit einem ersten Ausstoßarm 9 wird dieser erste Ausstoßarm 9 auf der Endlosbahn 8 weiterbewegt und anschließend wird auf dem Pakettisch 3 ein weiteres Paket 1 ausgerichtet und abgepresst und daraufhin von dem nächsten Ausstoßarm 9, der über die Endlosbahn 8 weiterbewegt wurde, mitgenommen und an den Auslaufförderer 12 übergeben. Ein drittes Paket 1 wird ebenfalls ausgerichtet und abgepresst und dann mit Hilfe des dritten Ausstoßarmes 9 an den Auslaufförderer 12 übergeben undsoweiterfort.

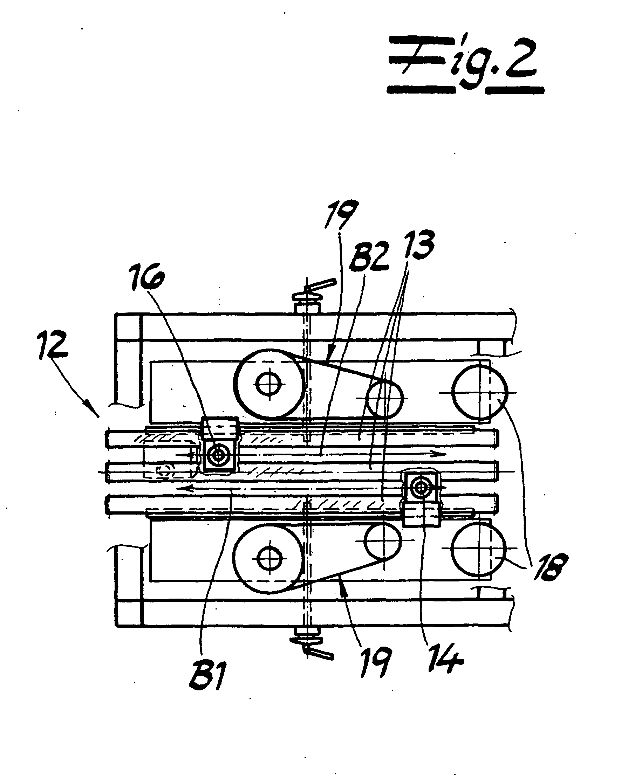

In Fig. 1 befindet sich ein erstes Paket 1 in der Ausgangsposition A auf dem Auslaufförderer 12. Dieses ausgerichtete Paket 1 wird von der Ausgangsposition A auf dem Auslaufförderer 12 in eine Zielposition Z befördert. Der Auslaufförderer 12 besteht vorzugsweise und im Ausführungsbeispiel aus mehreren parallelen Förderbändern 13. In Fig. 2 sind drei parallele Förderbänder 13 erkennbar. Es liegt im Rahmen der Erfindung, dass diese Förderbänder 13 synchron angetrieben werden.

In der Ausgangsposition A wird eine als erstes Führungselement ausgebildete erste Führungsstange 14 an der Vorderseite des ausgerichteten ersten Paketes 1 zur Anlage gebracht. Dazu wird die erste Führungsstange 14, die vorzugsweise und im Ausführungsbeispiel als Zylinderkolbenstange ausgebildet ist, aus einem unterhalb des Auslaufförderers 12 angeordneten ersten Zylinderkolben 15 in vertikaler Richtung ausgefahren und an der Vorderseite des Paketes 1 zur Anlage gebracht. Das erste Paket 1 wird dann mit dem Auslaufförderer 12 zur Zielposition Z befördert. Dabei wird die erste Führungsstange 14, an der Vorderseite des ersten Paketes 1 anliegend mit diesem ersten Paket 1 in die Zielposition Z überführt. In der Zielposition Z wird die erste Führungsstange 14 dann wieder von der Vorderseite des ersten Paketes 1 entfernt, indem die erste Führungsstange 14 wieder in den unterhalb des Auslaufförderers 12 angeordneten ersten Zylinderkolben 15 eingefahren wird. Danach wird die erste Führungsstange 14 mit ihrem ersten Zylinderkolben 15 wieder in die Ausgangsposition A zurückgefahren. Die Bahn, auf der sich die erste Führungsstange 14 und der erste Zylinderkolben 15 bei der Überführung von der Ausgangsposition A in die Zielposition Z und wieder zurück von der Zielposition Z zu der Ausgangsposition A bewegen, ist in der Fig. 2 strichpunktiert dargestellt worden.

Während die erste Führungsstange 14 mit dem ersten Zylinderkolben 15 und das erste Paket 1 von der Ausgangsposition A in die Zielposition Z bewegt wird, wird eine zweite Führungsstange 16 mit ihrem zweiten Zylinderkolben 17 von der Zielposition Z in die Ausgangsposition A zurückgefahren (Fig. 1 und 2). Dabei ist die zweite Führungsstange 16 in den zweiten Zylinderkolben 17 eingefahren und somit bewegt sich sowohl die zweite Führungsstange 16 als auch der zweite Zylinderkolben 17 insgesamt unterhalb des Auslaufförderers 12 zurück in die Ausgangsposition A. Mit anderen Worten behindert das in die Ausgangsposition A zurückfahrende zweite Führungselement die Bewegung des Paketes 1 von der Ausgangsposition A in die Zielposition Z nicht. Wenn die zweite Führungsstange 16 mit ihrem zweiten Zylinderkolben 17 die Ausgangsposition A erreicht, wird die zweite Führungsstange 16 aus dem zweiten Zylinderkolben 17 in vertikaler Richtung nach oben ausgefahren, so dass die zweite Führungsstange 16 an der Vorderseite eines ausgerichteten zweiten Paketes 1 zur Anlage gebracht werden kann. Dann wird das zweite Paket 1 (wie bereits beim ersten Paket 1 beschrieben) mit dem Auslaufförderer 12 in die Zielposition Z bewegt und dabei bewegt sich auch die zweite Führungsstange 16, an der Vorderseite des zweiten Paketes 1 anliegend, in die Zielposition Z. Wenn das zweite Paket 1 und die zweite Führungsstange 16 die Zielposition Z erreicht haben, wird dann die zweite Führungsstange 16 wieder in den zweiten Zylinderkolben 17 eingefahren und der zweite Zylinderkolben 17 wird mit der eingefahrenen zweiten Führungsstange 16 in die Ausgangsposition A zurückbewegt undsoweiterfort.

Beide Zylinderkolben 15, 17 befinden sich zweckmäßigerweise stets unterhalb des Auslaufförderers 12. Bei der Bewegung eines Zylinderkolbens 15, 17 von der Ausgangsposition A in die Zielposition Z befindet sich die als Zylinderkolbenstange ausgebildete jeweilige Führungsstange 14, 16 in ihrem ausgefahrenen Zustand. Bei der Bewegung eines Zylinderkolbens 15, 17 zurück von der Zielposition Z in die Ausgangsposition A befindet sich die als Zylinderkolbenstange ausgebildete jeweilige Führungsstange 14, 16 in ihrem eingefahrenen Zustand. Bei dieser Bewegung sind also sowohl der Zylinderkolben 15, 17 als auch die Führungsstange 14, 16 unterhalb des Auslaufförderers 12 angeordnet und behindern die gleichzeitige Bewegung eines Paketes 1 von der Ausgangsposition A in die Zielposition Z nicht. Die Führungsstange 14 bewegt sich auf der Bahn B1 hin und her zwischen Ausgangsposition A und Zielposition Z. Die Führungsstange 16 bewegt sich auf der zu der Bahn B1 zweckmäßigerweise parallelen Bahn B2 ebenfalls hin und her zwischen Ausgangsposition A und Zielposition Z. Die Bahnen B1 und B2 sind in Fig. 2 strichpunktiert dargestellt worden. Es liegt im Rahmen der Erfindung, dass sich die beiden Führungsstangen 14, 16 kontinuierlich oder quasi kontinuierlich auf den Bahnen B1 und B2 hin und her bewegen. Dies führt dazu, dass die auf den Auslaufförderer 12 übergebenen Pakete 1 nicht angehalten werden müssen und somit kontinuierlich und ohne Unterbrechung ihrer Bewegung abtransportiert werden können. Dadurch werden sehr vorteilhafte kurze Taktzeiten erreicht.

Nach bevorzugter Ausführungsform und im Ausführungsbeispiel sind an beiden Seiten des Auslaufförderers 12 seitliche Führungselemente zum seitlichen Führen bzw. zum seitlichen Abstützen der Pakete 1 vorgesehen. Vorzugsweise und im Ausführungsbeispiel nach den Figuren sind seitliche Führungsrollen 18 sowie seitliche endlos umlaufende Führungsgurte 19 für die auf dem Auslaufförderer 12 transportierten Pakete 1 vorgesehen.

## Patentansprüche

1. Vorrichtung zum Ausrichten und Abtransportieren von Pakten (1) lose gestapelter Druckerzeugnisse, wobei eine Ausrichteinrichtung zum Ausrichten der Pakete (1) vorgesehen ist und wobei die ausgerichteten Pakete (1) auf eine bewegbare Aufnahmefläche überführbar sind, mit der die Pakete (1) von einer Ausgangsposition (A) in eine Zielposition (Z) beförderbar sind, **dadurch gekennzeichnet**
**daß** ein erstes Führungselement vorgesehen ist, dass in der Ausgangsposition (A) an der Vorderseite eines ausgerichteten ersten Paketes (1) zur Anlage bringbar ist,
**daß** das erste Führungselement, an der Vorderseite des ersten Paketes (1) anliegend, mit dem ersten Paket (1) in die Zielposition (Z) überführbar ist und wobei das erste Führungselement in der Zielposition (Z) von der Vorderseite des ersten Paketes (1) entfernbar ist und in die Ausgangsposition (A) zurückfahrbar ist,
**daß** ein zweites Führungselement vorgesehen ist, das in der Ausgangsposition (A) an der Vorderseite eines ausgerichteten zweiten Paketes (1) zur Anlage bringbar ist
und **daß** das zweite Führungselement, an der Vorderseite des zweiten Paketes (1) anliegend, mit dem zweiten Paket (1) in die Zielposition (Z) überführbar ist, während das erste Führungselement in die Ausgangsposition (A) zurückführbar ist.

2. Vorrichtung nach Anspruch 1, wobei die bewegbare Aufnahmefläche von zumindest einem sich von der Ausgangsposition (A) zur Zielposition (Z) erstreckenden Förderband gebildet ist.

3. Vorrichtung nach einem der Ansprüche 1 oder 2, wobei die Führungselemente als vertikal angeordnete Führungsstangen (14, 16) ausgebildet sind.

4. Vorrichtung nach Anspruch 3, wobei die Führungsstangen (14, 16) in der Ausgangsposition (A) jeweils vertikal ausfahrbar sind und an der Vorderseite eines Paketes (1) zur Anlage bringbar sind.

5. Vorrichtung nach einem der Ansprüche 3 oder 4, wobei die Führungsstangen (14, 16) in der Zielposition (Z) jeweils vertikal einfahrbar sind und auf diese Weise von der Vorderseite des Paketes (1) entfernbar sind.

6. Vorrichtung nach einem der Ansprüche 3 bis 5, wobei eine Führungsstange (14, 16) als Zylinderkolbenstange ausgebildet ist und aus einem Zylinderkolben (15, 17) ausfahrbar sowie in den Zylinderkolben (15, 17) wieder einfahrbar ist.

7. Vorrichtung nach einem der Ansprüche 1 bis 6, wobei ein Führungselement unterhalb der bewegbaren Aufnahmefläche von der Zielposition (Z) in die Ausgangsposition (A) zurückfahrbar ist.

8. Vorrichtung nach einem der Ansprüche 1 bis 7, wobei ein Führungselement auf einer Strecke von der Zielposition (Z) in die Ausgangsposition (A) zurückfahrbar ist, die parallel zu der Förderstrecke ist, auf der ein Führungselement von der Ausgangsposition (A) zur Zielposition (Z) bewegbar ist.

9. Vorrichtung nach einem der Ansprüche 1 bis 8, wobei die Führungselemente kontinuierlich von der Ausgangsposition (A) zu der Zielposition (Z) und wieder von der Zielposition (Z) in die Ausgangsposition (A) bewegbar sind.

10. Vorrichtung nach einem der Ansprüche 1 bis 9, wobei an zumindest einer Seite, zweckmäßigerweise an beiden Seiten der bewegbaren Aufnahmefläche zumindest ein Führungselement zum seitlichen Führen und/oder Abstützen der Pakete (1) vorgesehen ist.

## Claims

1. A device for orienting and transporting away bundles (1) of loosely stacked printed products, an orienting device for orienting the bundles (1) being provided and the oriented bundles (1) being adapted to be transferred to a movable receiving surface on which the bundles (1) are conveyable from a starting position (A) to a destination position (Z), **characterized in**
**that** there is provided a first guide element that, in the starting position (A), is adapted to fit against the front side of an oriented first bundle (1),
**that** the first guide element, which abuts on the front side of the first bundle (1), is adapted to be transferred to the destination position (Z) together with said first bundle (1) and that, in the destination position (Z), the first guide element is removable from the front side of the first bundle (1) and is adapted to be returned to the starting position (A),
**that** there is provided a second guide element that, in the starting position (A), is adapted to fit against the front side of an oriented second bundle (1)
and **that** the second guide element, which abuts on the front side of the second bundle (1), is adapted to be transferred to the destination position (Z) together with said second bundle (1) while the first guide element is being returned to the starting position (A).

2. The device in accordance with claim 1, wherein the movable reception surface is formed by at least one belt conveyor that extends from the starting position (A) to the destination position (Z).

3. The device in accordance with any of the claims 1 or 2, wherein the guide elements are configured to be vertically disposed guide rods (14, 16).

4. The device in accordance with claim 3, wherein, in the starting position (A), the guide rods (14, 16) are each vertically extendable and are adapted to fit against the front side of a bundle (1).

5. The device in accordance with any of the claims 3 or 4, wherein, in the destination position (Z), the guide rods (14, 16) are each vertically retractable and are thus removable from the front side of the bundle (1).

6. The device in accordance with any of the claims 3 through 5, wherein one of the guide rods (14, 16) is configured to be a piston rod of a cylinder and is adapted to be moved out of a piston (15, 17) of said cylinder and back again into said piston (15, 17) of said cylinder.

7. The device in accordance with any of the claims 1 through 6, wherein a guide element is adapted to be returned from the destination position (Z) to the starting position (A) underneath the movable receiving surface.

8. The device in accordance with any of the claims 1 through 7, wherein a guide element is adapted to be returned from the destination position (Z) to the starting position (A) on a path that is parallel to the conveying path on which a guide element is adapted to move from the starting position (A) to the destination position (Z).

9. The device in accordance with any of the claims 1 through 8, wherein the guide elements are continuously movable from the starting position (A) to the destination position (Z) and back again from the destination position (Z) to the starting position (A).

10. The device in accordance with any of the claims 1 through 9, wherein at least on one side, suitably on both sides of the movable receiving surface, there is disposed at least one guide element for laterally guiding and/or supporting the bundles (1).

## Revendications

1. Dispositif destiné à aligner et à évacuer des paquets (1) d'imprimés empilés en vrac, un dispositif destiné à aligner les paquets (1) étant prévu et les paquets (1) alignés étant aptes à être transférés sur une surface réceptrice mobile sur laquelle les paquets (1) sont aptes à être acheminés depuis une position de départ (A) vers une position d'arrivée (Z), **caractérisé en ce**
**qu'**est prévu un premier élément de guidage qui, dans la position de départ (A), est adapté pour venir en appui contre la face avant d'un premier paquet (1) aligné,
**que** le premier élément de guidage, en appui contre la face avant du premier paquet (1), est destiné à être transféré avec le premier paquet (1) dans la position d'arrivée (Z) et que, en position d'arrivée (Z), le premier élément de guidage est adapté pour être retiré de la face avant du premier paquet (1) et est destiné à être ramené en position de départ (A),
**qu'**est prévu un deuxième élément de guidage qui, dans la position de départ (A), est adapté pour venir en appui contre la face avant d'un deuxième paquet (1) aligné,
et **que** le deuxième élément de guidage, en appui contre la face avant du deuxième paquet (1), est destiné à être transféré avec le deuxième paquet (1) dans la position d'arrivée (Z) pendant que le premier élément de guidage est ramené en position de départ (A).

2. Dispositif selon la revendication 1, où la surface réceptrice est formée par au moins une bande transporteuse qui s'étend depuis la position de départ (A) jusqu'à la position d'arrivée (Z).

3. Dispositif selon l'une quelconque des revendications 1 ou 2, où les éléments de guidage sont conformés en forme de tiges de guidage (14, 16) disposées verticalement.

4. Dispositif selon la revendication 3, où, dans la position de départ (A), les tiges de guidage (14, 16) sont chacune aptes à être sorties verticalement et à venir prendre appui sur la face avant d'un paquet (1).

5. Dispositif selon l'une quelconque des revendications 3 ou 4, où, dans la position d'arrivée (Z), les tiges de guidage (14, 16) sont escamotables verticalement et peuvent ainsi être retirées de la face avant du paquet (1).

6. Dispositif selon l'une quelconque des revendications 3 à 5, où une tige de guidage (14, 16) est conformée en forme de tige de piston d'un cylindre et qu'elle est adaptée pour sortir d'un piston de cylindre (15, 17) et pour rentrer dans le piston de cylindre (15, 17).

7. Dispositif selon l'une quelconque des revendications 1 à 6, où un élément de guidage est destiné à être ramené, depuis la position d'arrivée (Z), vers la position de départ (A) en dessous de la surface réceptrice mobile.

8. Dispositif selon l'une quelconque des revendications 1 à 7, où un élément de guidage est destiné à être ramené, depuis la position d'arrivée (Z), vers la position de départ (A) sur un chemin parallèle au chemin de roulement sur lequel un élément de guidage est destiné à être déplacé depuis la position de départ (A) vers la position d'arrivée (Z).

9. Dispositif selon l'une quelconque des revendications 1 à 8, où les éléments de guidage sont destinés à être déplacés en continu depuis la position de départ (A) vers la position d'arrivée (Z) et depuis la position d'arrivée (Z) vers la position de départ (A).

10. Dispositif selon l'une quelconque des revendications 1 à 9, où est prévu, d'un côté au moins, de manière plus appropriée des deux côtés de la surface réceptrice mobile, au moins un élément de guidage destiné à servir de guidage et/ou d'appui latéral aux paquets (1).
